# EUROPEAN PATENT APPLICATION

(11) **EP 2 647 600 A1**
(43) Date of publication of application: **09.10.2013**
(21) Application number: 11844952.9
(22) Date of filing: 28.11.2011
(51) Int. Cl.: C01B 31/04

(54) **CARBONACEOUS MATERIAL, PROCESS FOR PRODUCING CARBONACEOUS MATERIAL, PROCESS FOR PRODUCING FLAKED GRAPHITE, AND FLAKED GRAPHITE**

(30) Priority: 29.11.2010 JP 2010265286; 15.03.2011 JP 2011056714; 11.10.2011 JP 2011224145
(71) Applicant: Sekisui Chemical Co., Ltd., Osaka 530-8565 (JP); Oita University, Oita 870-1192 (JP)
(72) Inventor: WADA, Takuya, Mishima-gun Osaka 618-0021 (JP); TOYODA, Masahiro, Oita-shi Oita 870-1192 (JP)
(74) Representative: Ter Meer Steinmeister & Partner
(86) International application number: PCT/JP2011/077321
(87) International publication number: WO 2012/073861

(57) **Abstract**

Provided are a carbonaceous material with less variation in facing relation between graphenes, a process for producing the carbonaceous material, a process for producing exfoliated graphite that enables easy and massive production of graphite flaked more than ever, and the exfoliated graphite. The carbonaceous material contains an intercalation substance intercalated between graphenes of a graphene stack and is expanded graphite which shows in an XRD pattern respective peaks in 7-12° and 18-24° ranges of 2θ and in which a peak in 25-27° range has a smaller height than that in 18-24° range and a half width of the peak in 7-12° range is 4 degrees or less. The process for producing the carbonaceous material includes immersing at least a portion of sheet-like graphite or sheet-like pre-expanded graphite into an aqueous electrolyte solution to subject the graphite to an electrochemical treatment. The process for producing exfoliated graphite includes the step of applying an exfoliation force to the carbonaceous material to obtain exfoliated graphite. The exfoliated graphite is obtained by this production process.

## Description

### Technical Field

This invention relates to a carbonaceous material in which the spacing between graphenes is extended, a process for producing the same, a process for producing exfoliated graphite using the carbonaceous material, and exfoliated graphite obtained by the process.

### Background Art

Graphite is a stack formed of a large number of graphenes stacked. Graphene and exfoliated graphite having a smaller number of graphene layers stacked than graphite, which are obtained by exfoliating graphite, are now expected to be applied to electrically conductive materials, thermally conductive materials, and so on.
For example, Patent Literature 1 below discloses an electrical junction device formed of graphene and metal electrodes.

Various processes are heretofore proposed to obtain graphene or exfoliated graphite having a smaller number of graphene layers stacked than graphite, i.e., a graphene-like sheet. For example, Non-Patent Literature 1 below discloses a process for obtaining graphene or exfoliated graphite from graphite by applying a mechanical exfoliation force to the graphite.

Alternatively, Patent Literature 2 below discloses a process for forming a graphene sheet on a substrate. In Patent Literature 2, an active layer and fullerene molecules are deposited on a substrate. Next, the active layer and the fullerene molecules are heated to form a carbide layer. It is disclosed in the literature that the above carbide layer is further heated to modify the carbide layer and thus obtain a graphene sheet having high crystallinity.

### Citation List

### Patent Literature

Patent Literature 1: JP-A-2010-258246
Patent Literature 2: JP-A-2009-143761

### Non-Patent Literature

Non-Patent Literature 1: Y. Ohashi, T. Koizumi, et al., TANSO, 1997 [180] 235-238

### Summary of Invention

### Technical Problem

However, the conventional processes for producing graphene or exfoliated graphite have difficulty producing graphene or exfoliated graphite in large amounts and with ease. For the application to industrial materials, such as electrically conductive materials, it is strongly desired to obtain large-area graphene or exfoliated graphite in large amounts.

In addition, the process for obtaining exfoliated graphite in such a way as to apply a mechanical exfoliation force, as described in Non-Patent Literature 1, has difficulty obtaining exfoliated graphite. Specifically, the exfoliated graphite is likely to vary among portions thereof in which graphenes face one another in terms of angle between graphene principal surfaces. Therefore, the electrical conductivity of the exfoliated graphite in the in-plane direction may vary or even decrease.
Furthermore, the process also has difficulty intercalating another or other materials into the spaces between graphenes of the exfoliated graphite evenly among the spaces to impart various properties.

On a related note, when used for an industrial material, such as a thermally conductive material or an electrically conductive material, a high specific surface area graphene sheet, exfoliated graphite sheet portion or expanded graphite sheet portion can hold a large amount of substance between sheets. Therefore, there is strong demand for a structure having as such a collecting electrode portion a graphite sheet portion continuous with a graphene sheet, an exfoliated graphite sheet or an expanded graphite sheet.

However, the conventional processes for producing graphene or exfoliated graphite have difficulty producing a continuous body of a graphene sheet, exfoliated graphite sheet or expanded graphite sheet with a graphite sheet. Furthermore, even if a single graphene sheet or exfoliated graphite sheet can be produced from a graphite sheet, a plurality of graphene sheets, exfoliated graphite sheets or expanded graphite sheets continuous with a graphite sheet are extremely difficult to produce.

An object of the present invention is to provide a carbonaceous material with less variation in facing relation between graphenes and a process for producing the same. Furthermore, another object of the present invention is to provide a process for producing exfoliated graphite that enables easy and massive production of exfoliated graphite more than ever and exfoliated graphite obtained by the production process.

### Solution to Problem

A carbonaceous material according to the present invention is a carbonaceous material wherein an intercalation substance is intercalated between graphenes of a graphene stack and is expanded graphite an XRD pattern of which shows respective diffraction peaks within a range of 7 to 12 degrees of 2θ and within a range of 18 to 24 degrees of 2θ and in which a diffraction peak within a range of 25 to 27 degrees of 2θ has a smaller height than the diffraction peak within the range of 18 to 24 degrees of 2θ and a half width of the peak appearing within the range of 7 to 12 degrees of 2θ is 4 degrees or less.

In a particular aspect of the carbonaceous material according to the present invention, the graphene includes graphene oxide.

Another particular aspect of the carbonaceous material according to the present invention is a carbonaceous material including the carbonaceous material described above and a graphite portion continuous with the carbonaceous material described above. In this case, differences in properties between the continuing expanded graphite and graphite portion enable the exhibition of various functions. For example, the carbonaceous material can be used as a heat dissipation material by taking advantage of a property of superior heat dissipation of the expanded graphite and a property of superior thermal conductivity of the graphite portion. Alternatively, by intercalating various substances into the expanded graphite in which the spacing between graphenes is extended, functional materials exhibiting various electrical properties or other properties can be provided.

A process for producing a carbonaceous material according to the present invention includes the steps of: preparing sheet-like graphite or sheet-like pre-expanded graphite; inserting a portion of an electrode made of metal into the graphite or the pre-expanded graphite to pass the portion of the electrode through each of graphene surfaces of the graphite or the pre-expanded graphite, thereby bringing the electrode into contact with a plurality of graphene layers forming the graphite; and immersing at least a portion of the graphite or the pro-expanded graphite with the portion of the electrode inserted therein into an aqueous electrolyte solution and subjecting at least the portion of the graphite or the pre-expanded graphite to an electrochemical treatment using the graphite as a working electrode to apply direct voltage between the working electrode and a counter electrode, thereby obtaining a carbonaceous material at least of which is expanded graphite.

In a particular aspect of the process for producing a carbonaceous material according to the present invention, in the step of obtaining the carbonaceous material, the whole of the graphite or the pre-expanded graphite with the portion of the electrode inserted therein is immersed into the aqueous electrolyte solution and subjected to the electrochemical treatment using the graphite as the working electrode to apply direct voltage between the working electrode and the counter electrode to obtain a carbonaceous material the whole of which is expanded graphite.

In another particular aspect of the process for producing a carbonaceous material according to the present invention, in the step of obtaining the carbonaceous material, a portion of the graphite or the pre-expanded graphite with the portion of the electrode inserted therein is immersed into the aqueous electrolyte solution and subjected to the electrochemical treatment using the graphite as the working electrode to apply direct voltage between the working electrode and the counter electrode to obtain a carbonaceous material including the expanded graphite and graphite continuous with the expanded graphite.

In still another particular aspect of the process for producing a carbonaceous material according to the present invention, the sheet-like pre-expanded graphite is a sheet formed by pressing pre-expanded graphite.

In still another particular aspect of the process for producing a carbonaceous material according to the present invention, in a method of inserting the electrode, a plurality of slits are formed in the graphite or the pre-expanded graphite and the electrode used is an electrode including: a plurality of insertion portions to be inserted into the plurality of slits; and a connecting portion connecting the plurality of insertion portions. In this case, the contact area between each of the surfaces of the graphene layers of the graphite and the electrode can be increased. Thus, a larger amount of electrolyte ions can be intercalated into the spaces between the graphene layers more evenly among the spaces in a short time. Therefore, the interlayer distance in a portion of the resultant carbonaceous material made into expanded graphite can be further extended and the number of layers of graphite component left unflaked can be reduced.

In still another particular aspect of the process for producing a carbonaceous material according to the present invention, in the electrochemical treatment, a direct current voltage within a range of 0.3 V to 10 V is applied over 1 hour but less than 500 hours. In this case, electrolyte ions can be still more evenly intercalated into the spaces between graphenes of the graphite or the pre-expanded graphite. Therefore, the distance between the graphene layers can be more effectively extended and the number of layers of graphite component left unflaked can be reduced.

In still another particular aspect of the process for producing a carbonaceous material according to the present invention, the graphite or the pre-expanded graphite has a density within a range of 0.5 to 0.9. In this case, by the above electrochemical treatment, a larger amount of electrolyte ions can be intercalated into the interlayer spaces of the resultant carbonaceous material more evenly among the spaces and the distance between the graphene layers can be extended.

In still another particular aspect of the process for producing a carbonaceous material according to the present invention, the step of preparing the sheet-like graphite or the sheet-like pre-expanded graphite includes the steps of: preparing a preformed sheet made of graphite powder or pre-expanded graphite powder; and rolling the preformed sheet to obtain the sheet-like graphite or the sheet-like pre-expanded graphite. In this case, the density of the resultant sheet-like graphite or sheet-like pre-expanded graphite can be easily adjusted by controlling the rolling ratio.

A process for producing exfoliated graphite according to the present invention further comprises the step of applying an exfoliation force to the carbonaceous material to obtain exfoliated graphite after the step of obtaining the carbonaceous material in the process for producing a carbonaceous material according to the present invention.

In a particular aspect of the exfoliated graphite according to the present invention, the process further comprises the steps of: cutting the expanded graphite out of the carbonaceous material after the step of obtaining the carbonaceous material; and applying an exfoliation force to the expanded graphite to obtain exfoliated graphite.

Preferably, the step of applying the exfoliation force is performed by the step of applying one type of energy selected from the group consisting of heat, mechanical exfoliation force, and ultrasonic wave.

In another particular aspect of the exfoliated graphite according to the present invention, the step of applying the exfoliation force is performed by heating the expanded graphite at a temperature of 300°C to 1200°C. In this case, exfoliated graphite having a larger specific surface area can be obtained. Preferably, the step of applying the exfoliation force is performed by heating the expanded graphite at a temperature of 300°C to 600°C.

In still another particular aspect of the exfoliated graphite according to the present invention, the step of applying the exfoliation force is performed by heating the expanded graphite from room temperature to 550°C within 10 seconds. In this case, exfoliated graphite having a still larger specific surface area can be obtained.
Exfoliated graphite according to the present invention is exfoliated graphite obtained by the above process for producing exfoliated graphite according to the present invention.

### Advantageous Effects of Invention

Since the carbonaceous material according to the present invention contains an intercalation substance intercalated between the graphenes of the graphene stack and is made of expanded graphite having an XRD pattern which shows respective diffraction peaks within a 2θ (CuKα) range of 7 to 12 degrees and within a 2θ (CuKα) range of 18 to 24 degrees both representing expanded graphite and in which a diffraction peak within a 2θ (CuKα) range of 25 to 27 degrees representing graphite has a smaller height than the diffraction peak within the 2θ (CuKα) range of 18 to 24 degrees, the carbonaceous material is superior in evenness in terms of intercalation of the intercalation substance into each space between the graphene layers. Furthermore, a sufficient amount of the intercalation substance is intercalated between the graphene layers, so that the distance between the graphenes can be extended. Therefore, the present invention can provide a carbonaceous material from which exfoliated graphite flaked more than ever can be easily and stably obtained by subjecting the carbonaceous material to an exfoliation treatment, such as heat treatment.

In the process for producing a carbonaceous material according to the present invention, the sheet-like graphite or the sheet-like pre-expanded graphite is electrochemically treated in an aqueous electrolyte solution, so that electrolyte ions in the aqueous electrolyte solution 6 can be intercalated as an intercalation substance between the graphenes of the graphite or the pre-expanded graphite. Therefore, a carbonaceous material can be obtained in which, like the carbonaceous material according to the present invention, the intercalation substance is intercalated between the graphenes of the graphene stack to extend the distance between the graphenes.

In the process for producing exfoliated graphite according to the present invention, after the carbonaceous material is obtained by the process for producing a carbonaceous material according to the present invention, an exfoliation force is applied to the carbonaceous material to obtain exfoliated graphite. Therefore, exfoliated graphite flaked more than ever can be easily and stably obtained.

Since the exfoliated graphite according to the present invention is exfoliated graphite obtained by the process for producing exfoliated graphite according to the present invention, it has a higher degree of flaking than conventional exfoliated graphites. Therefore, the exfoliated graphite of the present invention is superior in physical properties, such as elastic modulus, and electrical properties, such as electrical conductivity. Hence, for example, even when a small amount of exfoliated graphite of the present invention is dispersed into resin, a resin composite material having superior rigidity and burning resistance can be obtained.

### Brief Description of Drawings

[Fig. 1] Figs. 1(a) and 1(b) are a perspective view and a side view of a carbonaceous material according to a second embodiment of the present invention.
[Fig. 2] Fig. 2 is a schematic perspective view for illustrating an example of the step of inserting an electrode into graphite in a production method of one embodiment of the present invention.
[Fig. 3] Fig. 3 is a schematic perspective view showing an example of a state of the electrode inserted in the graphite in the production method of the one embodiment of the present invention.
[Fig. 4] Fig. 4 is a schematic perspective view for illustrating another example of the step of inserting an electrode into graphite in the production method of the one embodiment of the present invention.
[Fig. 5] Fig. 5 is a schematic view for illustrating an example of the step of performing an electrochemical treatment in the production method of the one embodiment of the present invention.
[Fig. 6] Fig. 6 is a schematic view for illustrating another example of the step of performing an electrochemical treatment in the production method of the one embodiment of the present invention.
[Fig. 7] Fig. 7 is a schematic view showing the step of rolling a sheet made of expanded graphite as a base material in the one embodiment of the present invention.
[Fig. 8] Fig. 8 is a graph showing a state of application of direct voltage in Example 1.
[Fig. 9] Fig. 9 is a graph showing XRD patterns of an expanded graphite portion of a carbonaceous material obtained in Example 1, a graphite sheet of Comparative Example 1, and exfoliated graphite obtained in Comparative Example 2.
[Fig. 10] Fig. 10 is a graph showing a state of application of direct voltage in Example 3.
[Fig. 11] Fig. 11 is a graph showing XRD patterns of an expanded graphite portion of a carbonaceous material obtained in Example 3, the graphite sheet of Comparative Example 1, and the exfoliated graphite obtained in Comparative Example 2.
[Fig. 12] Fig. 12 is a graph showing a state of application of direct voltage in Example 5.
[Fig. 13] Fig. 13 is a graph showing an XRD pattern of an expanded graphite portion of a carbonaceous material obtained in Example 5.
[Fig. 14] Fig. 14 is a graph showing XRD patterns of the expanded graphite portion of the carbonaceous material obtained in Example 5, the graphite sheet of Comparative Example 1, and the exfoliated graphite obtained in Comparative Example 2.
[Fig. 15] Fig. 15 is a graph showing a state of application of direct voltage in Example 7.
[Fig. 16] Fig. 16 is a graph showing an XRD pattern of an expanded graphite portion of a carbonaceous material obtained in Example 7.
[Fig. 17] Fig. 17 is a graph showing an XRD pattern measured only for a glass cell in Comparative Example 2. Description of Embodiments

The present invention will become apparent by the following description of specific embodiments of the present invention.

The term graphite portion herein refers to a portion formed of graphite which is an ordinary graphene stack or a portion formed of graphite which is made by rolling pre-expanded graphite to make the space between graphenes narrower than pre-expanded graphite.

The term expanded graphite herein refers to graphite in which an intercalation substance is intercalated into original graphite and the distance between graphenes is extended and also refers to graphite in which the distance between graphenes is extended by oxidation thereof. Note that expanded graphite is different from pre-expanded graphite used as a source material.

As used herein, a graphene is a single sheet-like body formed of a hexagonal carbon layer.

The term exfoliated graphite herein refers to a graphene stack obtained by exfoliating the above-mentioned expanded graphite and having a smaller number of graphene layers stacked than graphite, i.e., refers to a graphene-like sheet.

Furthermore, graphene contained in the expanded graphite and exfoliated graphite in the present invention may be graphene oxide. If graphene is graphene oxide, compounds or polymers having a functional group can be easily grafted thereonto.

### (Carbonaceous Material)

A carbonaceous material according to the present invention is a carbonaceous material containing an intercalation substance intercalated between the graphenes of a graphene stack and is made of expanded graphite having an XRD spectra which shows respective peaks within a 2θ (CuKα) range of 7 to 12 degrees and within a 2θ (CuKα) range of 18 to 24 degrees and in which the peak appearing within the 2θ (CuKα) range of 7 to 12 degrees has a half width of four degrees or less and the diffraction peak appearing within the 2θ (CuKα) range of 18 to 24 degrees has a higher intensity than a peak appearing within a 2θ (CuKα) range of 25 to 27 degrees.

Because the half width varies depending upon the measurement conditions, the half width in the present invention is determined from a diffraction peak in an XRD measurement done under the following conditions: 50 kV tube voltage, 150 mA tube current, 1°/min scan speed, 1° divergence slit, 1° scattering slit, 0.15 mm receiving slit, and Cu-Kα tube.

The peak appearing within the 2θ (CuKα) range of 25 to 27 degrees is a peak due to the (002) plane of original graphite, while the peak within the 2θ (CuKα) range of 7 to 12 degrees is a peak due to the (002) plane of expanded graphite. Therefore, the above expanded graphite, which is a carbonaceous material of the present invention, is graphite in which an intercalation substance is intercalated between graphenes, i.e., intercalation substance-intercalated graphite. Although no particular limitation is placed on the type of the intercalation substance, examples include acidic electrolyte ions, such as nitrate ions.

In the present invention, the half width of the peak appearing within the range of 7 to 12 degrees is not more than four degrees, preferably not more than three degrees, and more preferably not more than two degrees. It is found that the distance between graphene layers is represented by the angle of the top of the diffraction peak within the 2θ (CuKα) range of 7 to 12 degrees in the XRD pattern and smaller 2θ peak angle provides larger interlayer distance. Therefore, since, in the above expanded graphite which is a carbonaceous material of the present invention, the half width of the peak appearing within the range of 7 to 12 degrees is not more than four degrees, the interlayer distance between graphenes is extended as compared with original graphite by intercalation of the intercalation substance.

Furthermore, in the present invention, in correspondence with the diffraction peak due to the (002) plane of the expanded graphite appearing within the 2θ (CuKα) range of 7 to 12 degrees, a diffraction peak due to the (004) plane of the same expanded graphite appears within the 2θ (CuKα) range of 18 to 24 degrees. This means that the above expanded graphite which is a carbonaceous material of the present invention has a more uniform multilayer structure. Therefore, the state of intercalation of the intercalation substance into the spaces between graphenes is extremely uniform among the spaces.

In the above expanded graphite which is a carbonaceous material of the present invention, the half width of the peak appearing within the range of 7 to 12 degrees is four degrees or less and the existence of the diffraction peak due to the (004) plane of the expanded graphite can be confirmed. This means that the intercalation substance is intercalated into the spaces between the graphene layers extremely evenly among the spaces, i.e., the amount of intercalation substance intercalated into each space between the graphene layers does not vary much from space to space.

Hence, the carbonaceous material according to the present invention is superior in evenness among the angles formed between their respective pairs of adjacent graphene principal surfaces by intercalation of the intercalation substance and evenness among the amounts of intercalation substance intercalated into their respective spaces between the graphene layers. Thus, graphenes of the above expanded graphite which is a carbonaceous material can be easily exfoliated one from another by applying an exfoliation force. More specifically, if the amount of intercalation substance intercalated into each space between the graphene layers varies from space to space, there will exist a portion having graphenes remaining unexfoliated, particularly upon application of a thermal exfoliation force. In contrast, since the present invention exhibits superior evenness among the amounts of intercalation substance intercalated into their respective spaces between the graphene layers, adjacent graphenes can be certainly exfoliated one from another between almost all pairs of adjacent graphenes upon application of an exfoliation force that enables exfoliation of the adjacent graphenes. Therefore, by using the carbonaceous material according to the present invention, graphene or exfoliated graphite can be easily obtained by application of an exfoliation force.

Furthermore, since an electrolyte can be intercalated into the spaces between the graphene layers more evenly among the spaces, the number of layers of graphite component left unflaked throughout the flaking treatment can be reduced. Therefore, graphene or exfoliated graphite flaked more than in conventional techniques can be easily obtained by exfoliation.

In addition, since the carbonaceous material according to the present invention is superior in evenness among the angles formed between their respective pairs of adjacent graphene principal surfaces by intercalation of the intercalation substance and evenness among the amounts of intercalation substance intercalated into their respective spaces between the graphene layers, a carbonaceous material can be provided which has high electrical conductivity in the graphene in-plane direction and low electrical conductivity in the thickness direction. Furthermore, another or other substances can be easily intercalated between graphenes of the carbonaceous material according to the present invention.

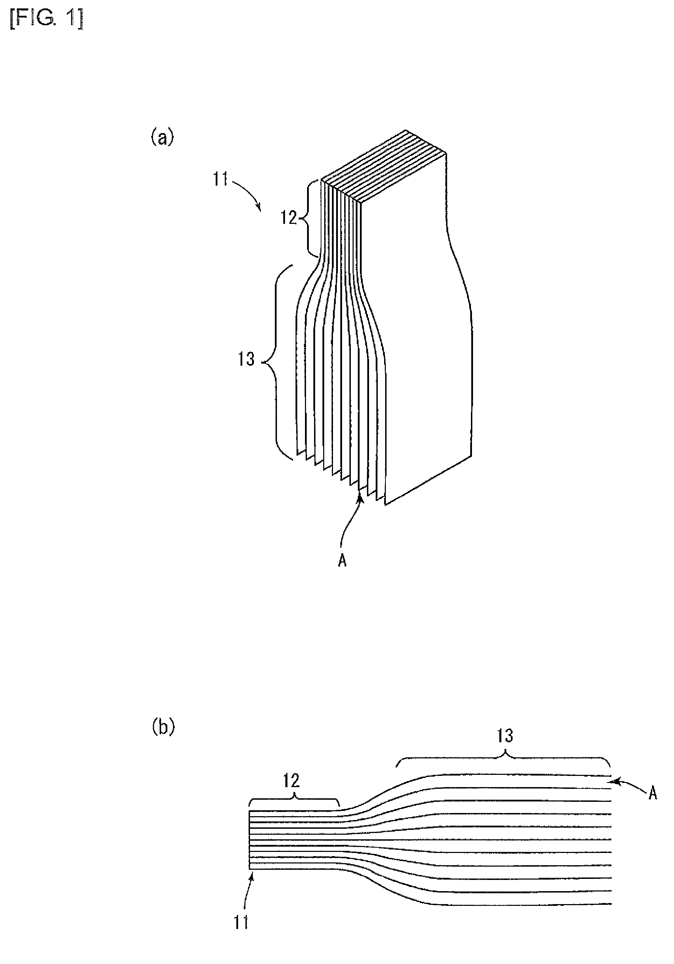

In a second embodiment of the carbonaceous material according to the present invention, the above expanded graphite may be continuous with a graphite portion. Figs. 1(a) and 1(b) are a perspective view and a side view of a carbonaceous material according to the second embodiment of the present invention. The carbonaceous material 11 includes a graphite portion 12 and an expanded graphite 13 continuous with the graphite portion 12. The graphite portion 12, as described previously, is a sheet-like portion made of ordinary graphite or a sheet-like portion made by rolling pre-expanded graphite. On the other hand, the expanded graphite 13 is a portion in which the distance between graphenes is extended as shown in the arrow A in the figures.

In the carbonaceous material 11, the graphenes forming the graphite portion 12 are continuous with the graphenes forming the expanded graphite 13. Therefore, the graphenes of the graphite portion 12 are thermally or electrically coupled or connected to the graphenes of the expanded graphite 13.

Since, as described previously, the expanded graphite 13 is superior in evenness among the angles formed between their respective pairs of adjacent graphene principal surfaces and evenness among the amounts of intercalation substance intercalated into their respective spaces between the graphene layers, it has a uniform multilayer structure. Therefore, also when an exfoliation force is applied to the carbonaceous material of this embodiment, graphene or exfoliated graphite can be easily obtained.

In addition, since in the expanded graphite 13 the intercalation substance is intercalated between the graphenes of the graphene stack, the expanded graphite 13 exhibits different properties from the graphite portion 12. For example, the graphite portion 12 has superior thermal conductivity because of the graphenes in close contact with one another, while the expanded graphite 13 has superior heat dissipation because of the extended inter-graphene spacing. By taking advantage of these properties, the carbonaceous material 11 can be used as a heat dissipation material, for example. Specifically, the graphite portion 12 may be thermally coupled to a heat source. Thus, heat can be effectively dissipated at the expanded graphite 13. Hence, the carbonaceous material 11 can be suitably used as a heat dissipation member, for example.

Furthermore, graphene has high electrical conductivity in the direction of the plane. Therefore, by connecting the graphite portion 12 to another electrical connecting member and taking advantage of the expanded graphite 13 having an extended inter-graphene spacing, various electrical properties can be exhibited.

The plane shape of the carbonaceous material 11 shown in Fig. 1, or the shape thereof as viewed in the direction of the plane of graphene, is not limited to a rectangular shape. Furthermore, although in the carbonaceous material of the present invention no particular limitation is placed on the number of graphene layers stacked in the graphite portion and the expanded graphite portion, it is preferably 1 to about 100 layers. Within this range, the carbonaceous material 11 can be easily produced in which the graphite portion 12 and the expanded graphite 13 are continuous. In addition, various physical properties can be easily exhibited.

Moreover, since in the carbonaceous material of this embodiment the inter-graphene spacing of the expanded graphite 13 is extended, various intercalation substances, such as a compound having a functional group, can be intercalated between the graphenes or various substances can be filled in between the graphenes to provide a carbonaceous material that can exhibit various physical properties.

In the carbonaceous material of this embodiment, the thickness of the expanded graphite 13 is preferably two or more times the thickness of the graphite portion 12 and more preferably three or more times the same. In these cases, the expanded graphite 13 can be increased in specific surface area.

### (Process for Producing Carbonaceous Material)

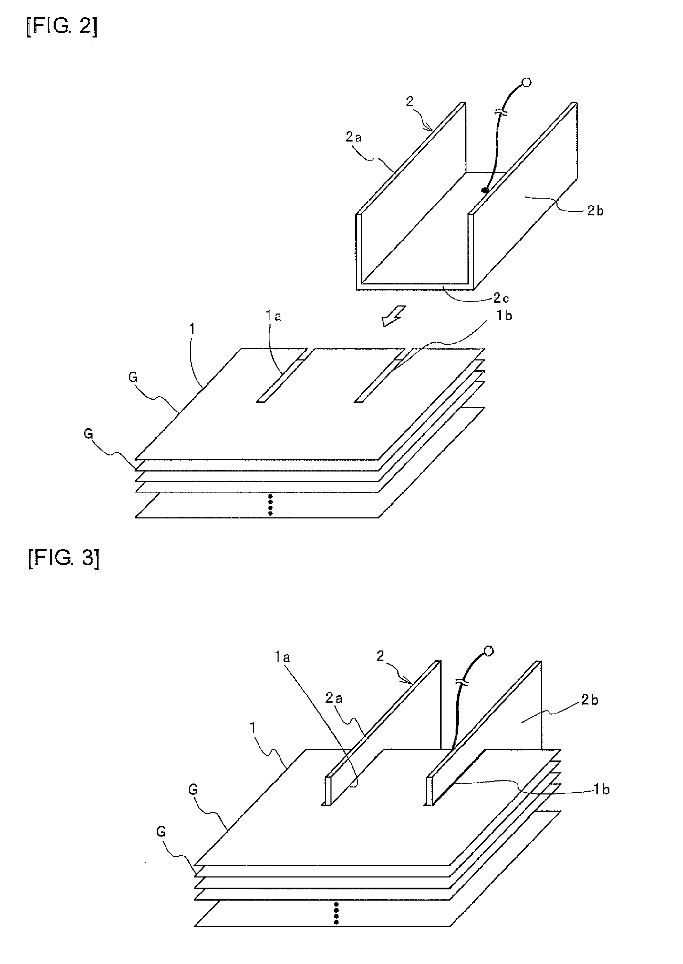

A description is next given of a process for producing a carbonaceous material of the present invention with reference to Figs. 2 to 6. First, as shown in Fig. 2, a sheet 1 made of sheet-like graphite or sheet-like expanded graphite is prepared. Note that although the present invention aims at obtaining expanded graphite, pre-expanded graphite having a narrower interlayer spacing than the expanded graphite to be obtained in the present invention may be used as a source material. A sheet formed by pressing pre-expanded graphite may be used as the sheet-like pre-expanded graphite. The sheet 1 is a stack of a plurality of graphenes G as schematically shown.

Next, a plurality of slits 1a, 1b shown in Fig. 2 are formed in the thickness direction of the sheet 1 which is a direction perpendicular to the direction of the plane of the graphenes G of the sheet 1. The formation of the slits 1a, 1b can be implemented such as by an appropriate machining process or irradiation of laser light.

Next, portions of an electrode 2 are inserted into the slits 1a, 1b. The electrode 2 includes insertion portions 2a, 2b to be inserted into the slits 1a, 1b, respectively, and a connecting portion 2c connecting the insertion portions 2a, 2b. By inserting the insertion portions 2a, 2b of the electrode 2 into the slits 1a, 1b, a structure can be obtained in which portions of the electrode 2 are inserted in the sheet 1. The electrode 2 is made of Pt in this embodiment but may be made of any electrical conductor, such as an appropriate metal. No particular limitation is placed on the number of slits and the direction of extension of the slits.

No particular limitation is placed on the insertion method so long as it allows the electrode 2 to be inserted into the slits and allows the sheet 1 to be fixed to the electrode 2 during an electrochemical treatment to be described hereinafter. For example, as shown in Fig. 2, the insertion portions 2a, 2b of the electrode 2 may be inserted into the slits 1a, 1b so that the direction of the plane of the connecting portion 2c of the electrode 2 is the same direction as the direction of the plane of the graphenes G of the sheet 1. In this case, a structure with portions of the electrode 2 inserted in the sheet 1 as shown in Fig. 3 can be obtained. In this structure, a portion of the sheet 1 is mounted on the upper surface of the connecting portion 2c of the electrode 2, so that the sheet 1 can be easily fixed to the electrode 2 while the above structure is immersed in an electrolyte solution in the electrochemical treatment to be described hereinafter.

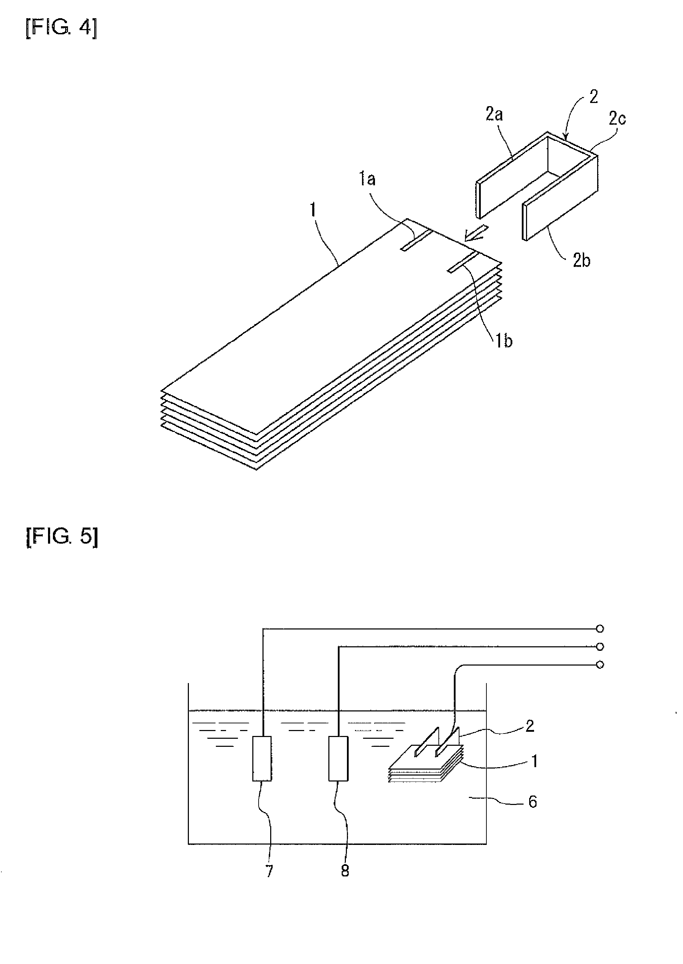

Alternatively, for example, as shown in Fig. 4, the insertion portions 2a, 2b of the electrode 2 may be inserted into the slits 1a, 1b so that the direction of the plane of the connecting portion 2c of the electrode 2 is perpendicular to the direction of the plane of the graphenes G of the sheet 1. In this case, in immersing the above structure into the electrolyte solution in the electrochemical treatment to be described hereinafter, it is easy to immerse only a portion of the structure with portions of the electrode 2 inserted in the sheet 1 into the electrolyte solution 6. In such an insertion method, it is desired that the direction of extension of the slits 1a, 1b be a direction in which the distance between the slits 1a, 1b is gradually extended toward the edge of the sheet 1 to prevent the sheet from dropping out of the electrode 2 in the course of electrolysis.

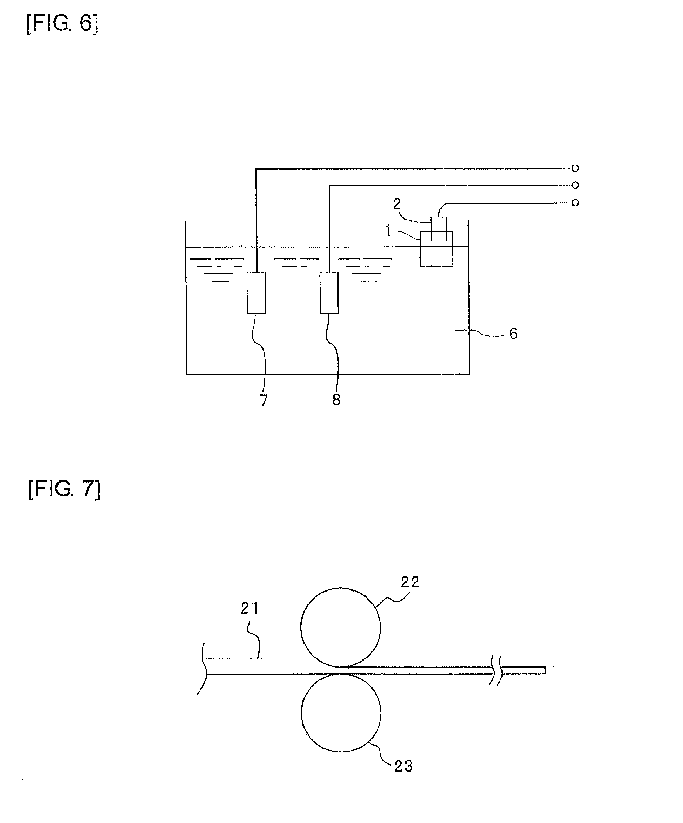

Next, as shown in Figs. 5 and 6, at least a portion of the above structure with the portions of the electrode 2 inserted in the sheet 1 is immersed into the aqueous electrolyte solution 6. No particular limitation is placed on the type of the electrolyte solution 6 but, for example, a nitric acid aqueous solution or a sulfuric acid aqueous solution can be used. Thus, nitrate ions or sulfate ions can be intercalated between the graphenes.

No particular limitation is placed on the concentration of the electrolyte solution 6 but, if the electrolyte solution 6 is an aqueous solution, the concentration is preferably within a range of about 10% by weight to about 80% by weight. Within this range, electrolyte ions can be more certainly intercalated between the graphenes by the electrochemical treatment to be described hereinafter.

In immersing the above structure into the aqueous electrolyte solution 6, the whole structure may be immersed into the electrolyte solution 6, for example, as shown in Fig. 5. In this case, a carbonaceous material made wholly of the expanded graphite can be produced.

Alternatively, for example, as shown in Fig. 6, only a portion of the above structure may be immersed into the electrolyte solution 6 so that a lower portion of the sheet 1, which is a portion of the structure, is immersed into the electrolyte solution 6 but an upper portion thereof is not immersed into the electrolyte solution 6. In this case, only the portion immersed in the electrolyte solution 6 can be made into expanded graphite by the electrochemical treatment to be described hereinafter. Thus, the carbonaceous material 11 shown in Fig. 1, i.e., a carbonaceous material 11 in which an expanded graphite 13 is continuous with a graphite portion 12, can be produced.

As described so far, in immersing the above structure into the aqueous electrolyte solution 6, the whole of the sheet 1 may be immersed into the aqueous electrolyte solution 6 or only a portion of the sheet 1 may be immersed into the aqueous electrolyte solution 6.

As shown in Figs. 5 and 6, the electrochemical treatment is performed by using the sheet 1 thus immersed into the electrolyte solution 6 as a working electrode, immersing a counter electrode 7 and a reference electrode 8 thereinto, and then applying direct voltage between the counter electrode 7 and the sheet 1. Thus, in the portion of the sheet 1 immersed in the electrolyte solution 6, electrolyte ions in the electrolyte solution 6 are intercalated as an intercalation substance between the graphenes of the sheet 1. As a result, the space between the graphenes of the sheet 1 is extended. Hence, in the portion of the sheet 1 immersed in the electrolyte solution 6, the above expanded graphite can be obtained. The counter electrode 7 is made of an appropriate electrical conductor, such as Pt. The reference electrode 8 is made such as of Ag/AgCl.

Here, when the whole of the above structure is immersed into the electrolyte solution 6 as shown in Fig. 5, electrolyte ions in the electrolyte solution 6 are intercalated as an intercalation substance between the graphenes forming the entire sheet 1. Thus, a carbonaceous material made wholly of the expanded graphite can be obtained.

Alternatively, when only a portion of the above structure is immersed into the electrolyte solution 6 as shown in Fig. 6, the portion of the sheet 1 not immersed into the electrolyte solution 6 remains original sheet-like graphite or sheet-like pre-expanded graphite. Therefore, the portion of the sheet 1 having immersed in the electrolyte solution 6 becomes the expanded graphite 13 shown in Fig. 1, while the portion thereof having not immersed in the electrolyte solution 6 forms the graphite portion 12. In this manner, the above-mentioned carbonaceous material 11 can be obtained.

In the electrochemical treatment, preferably, a direct voltage of 0.3 V to 10 V is applied over 1 hour but less than 500 hours. If the direct voltage is within this range, electrolyte ions, such as nitrate ions or sulfate ions, can be more certainly intercalated between the graphenes of the graphite. Thus, the expanded graphite of the present invention can be still more certainly obtained. More preferably, a direct voltage within a range of 0.3 V to 3 V is used. Still more preferably, a direct voltage within a range of 0.9 V to 2 V is used. The time of application of the direct voltage should be an hour or more but, if too long, the productivity will decrease and the effect of intercalating electrolyte ions will be saturated. Therefore, the time of application of the direct voltage should be less than 500 hours.
Furthermore, although no particular limitation is placed on the temperature of the electrolyte solution 6 during the electrochemical treatment, the electrolyte solution, if aqueous, should be at a temperature of about 5°C to about 100°C.

In the process for producing expanded graphite of the present invention, it is preferred that, prior to the formation of the slits 1a, 1b in the sheet 1 made of graphite or pre-expanded graphite, a lower-density sheet 1 should be prepared. The density of the sheet 1 is preferably within a range of 0.5 to 0.9.

To prepare such a lower-density sheet 1, the following method, for example, can be used. First, a powder of graphite or pre-expanded graphite as a source material is preliminarily sheet-formed. As shown in Fig. 7, a preformed sheet 21 thus obtained is fed between a pair of rolls 22, 23 and rolled therebetween. Thus, a sheet 1 thinner than the preformed sheet 21 can be obtained. In this case, the density of the sheet 1 can be adjusted by controlling the rolling ratio. Specifically, by decreasing the rolling ratio, a relatively low-density graphite sheet or sheet-like pre-expanded graphite can be obtained.

If, in relation to the process for producing expanded graphite of the present invention, the carbonaceous material 11 in which the expanded graphite 13 is continuous with the graphite portion 12 as shown in Fig. 1 is produlamina graphiteced, the thickness of a sheet 1 as a base material is preferably within a range of 50 µm to 3 mm. In this case, an expanded graphite 13 can be obtained which has a larger specific surface area than a graphite portion 12 and is continuous with the graphite portion 12.

The inventors have found that with the use of a low-density sheet 1 made of graphite or pre-expanded graphite in the above manner, electrolyte ions serving as an intercalation substance can be more evenly intercalated and the interlayer distance between the graphenes can be more certainly extended.

### (Process for Producing Exfoliated Graphite)

In a process for producing exfoliated graphite according to the present invention, after the carbonaceous material is obtained in the above manner, an exfoliation force is applied to the carbonaceous material. Thus, exfoliated graphite can be obtained.

The above carbonaceous material is superior in evenness among the angles formed between their respective pairs of adjacent graphene principal surfaces by intercalation of nitrate ions or the like and evenness among the amounts of intercalation substance intercalated into their respective spaces between the graphene layers. Thus, graphenes of the above expanded graphite which is the carbonaceous material can be easily exfoliated one from another by applying an exfoliation force. More specifically, if the amount of intercalation substance intercalated into each space between the graphene layers varies from space to space, there will exist a portion having graphenes remaining unexfoliated, particularly upon application of a thermal exfoliation force. In contrast, since the present invention exhibits superior evenness among the amounts of intercalation substance intercalated into their respective spaces between the graphene layers, adjacent graphenes can be certainly exfoliated one from another between almost all pairs of adjacent graphenes upon application of an exfoliation force that enables exfoliation of the adjacent graphenes. Therefore, by using the carbonaceous material according to the present invention, graphene or exfoliated graphite can be easily obtained by application of an exfoliation force.

If the carbonaceous material is a carbonaceous material in which the above expanded graphite is continuous with a graphite portion, the expanded graphite may be first cut out of the carbonaceous material. This cutout can be done using an appropriate cutter or a non-contact cutting apparatus, such as a laser apparatus. Thereafter, an exfoliation force may be applied to the cutout expanded graphite to obtain exfoliated graphite.

The exfoliation step for obtaining graphene or exfoliated graphite from the carbonaceous material or the expanded graphite can be done by performing the step of applying one type of energy selected from the group consisting of heat, mechanical exfoliation force, ultrasonic wave, and other energies.

To give an example, when the carbonaceous material or the expanded graphite is heated to a temperature of 300°C to 1200°C, preferably a temperature of 500°C to 1200°C, and more preferably a relatively high temperature of 800°C to 1200°C, exfoliated graphite can be obtained from the carbonaceous material or the expanded graphite. By heat application within the above temperature ranges, exfoliated graphite having a specific surface area of over 600 m²/g can be obtained according to the present invention. Alternatively, exfoliated graphite having a specific surface area of over 1200 m²/g can be obtained. Still alternatively, exfoliated graphite having a specific surface area of over 1500 m²/g can be obtained.

In addition, when the carbonaceous material or the expanded graphite is rapidly heated within the above temperature ranges, a graphene or exfoliated graphite having a still larger specific surface area can be obtained. To obtain graphene or exfoliated graphite having a large specific surface area, it is preferred to heat the carbonaceous material or the expanded graphite and raise it from room temperature to 550°C within 10 seconds.

The method for heating the carbonaceous material or the expanded graphite is preferably a method performed using an induction heating apparatus. By using the induction heating apparatus, nitric acid intercalated between the layers is directly heated. Furthermore, when the current applied to the induction heating apparatus is set larger than 10 A, the temperature rise time can be shortened. However, no particular limitation is placed on the heating method so long as exfoliated graphite can be obtained from the carbonaceous material or the expanded graphite. The heating may be performed in a high-temperature tubular furnace, for example.

As described so far, in the expanded graphite included in the carbonaceous material according to the present invention, the amount of intercalation substance intercalated in each space between the graphene layers is even. Therefore, graphene or exfoliated graphite having a higher degree of flaking than ever can be provided.

By subjecting the carbonaceous material according to the present invention to the exfoliation step as described above, exfoliated graphite of the present invention can be obtained. The exfoliated graphite of the present invention has a higher degree of flaking than ever. Therefore, the exfoliated graphite of the present invention is superior in physical properties, such as elastic modulus, and electrical properties, such as electrical conductivity. Hence, for example, even when a small amount of exfoliated graphite of the present invention is dispersed into resin, a resin composite material having superior rigidity and burning resistance can be obtained.

The carbonaceous material which is the expanded graphite obtained by the present invention or the expanded graphite cut out of the carbonaceous material may be kneaded with resin, with the expanded graphite exfoliated by a shear force given in the kneading, resulting in exfoliated graphite. In this case, a resin composite material can be obtained in which the exfoliated graphite of the present invention is dispersed.
Next, the present invention will be illustrated by specific examples of the present invention and comparative. However, the present invention is not limited by the following examples.

### (Example 1)

As shown in Fig. 7, pre-expanded graphite was fed between a pair of rolls and sheet-formed to prepare a low-density graphite sheet with a density of 0.7 and a thickness of 1 mm.

The graphite sheet with a density of 0.7 obtained in the above manner was cut into a size of 3 cm by 3 cm to obtain a graphite sheet serving as an electrode material. Two slits were cut and formed in this graphite sheet, as shown in Fig. 2, with a cutter knife to have a slit length of 1 cm and a slit width of 1 cm.

Next, a Pt-made electrode 2 shown in Fig. 2 was inserted into the graphite sheet with the two slits formed therein. The graphite sheet thus prepared was used as a working electrode (anode) and immersed into an aqueous nitric acid solution having a concentration of 60% by weight, together with a counter electrode (cathode) made of Pt and a reference electrode made of Ag/AgCl. In the immersion, the whole of the graphite sheet was immersed into the aqueous nitric acid solution.

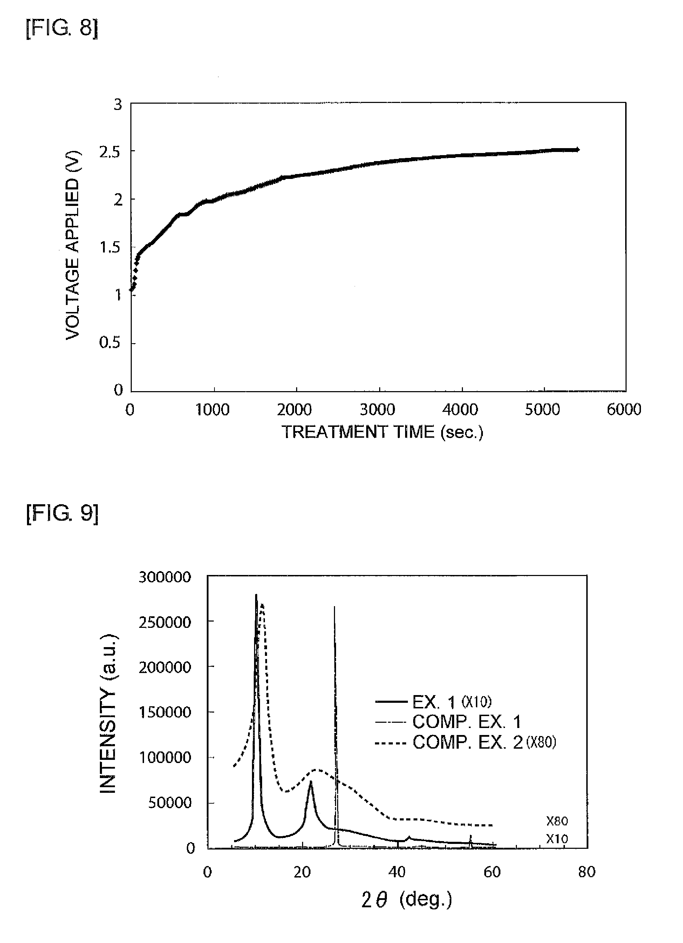

Subsequently, the graphite sheet was subjected to an electrochemical treatment by applying direct voltage thereto. In the electrochemical treatment, a voltage shown in Fig. 8 was applied for 2.5 hours. Thus, the graphite used as the working electrode for an anode was made into expanded graphite.

The expanded graphite thus obtained was dried and the multilayer structure of the resultant expanded graphite was evaluated by XRD measurement. An XRD pattern of the expanded graphite of Example 1 is shown by the solid line in Fig. 9.

### (Example 2)

The expanded graphite obtained in Example 1 was cut into 1-cm pieces and one of the pieces was put into a carbon crucible and subjected to an electromagnetic induction heating treatment. An induction heating apparatus used was MU-1700D manufactured by SK Medical Electronics Co., Ltd. and the treatment was conducted at a current of 14 A in an atmosphere of argon gas so that the highest achieving temperature was 550°C. When during the treatment the temperature at the surface of the expanded graphite was measured with a radiation thermometer, it took eight seconds for the surface temperature of the expanded graphite to rise from room temperature to 550°C. By the above treatment, the expanded graphite was exfoliated.

When powder of the resultant exfoliated graphite was measured using nitrogen gas with a specific surface area measurement system ASAP-2000 manufactured by Shimadzu Corporation, it exhibited a specific surface area of 1958 m²/g in a single measurement.

### (Example 3)

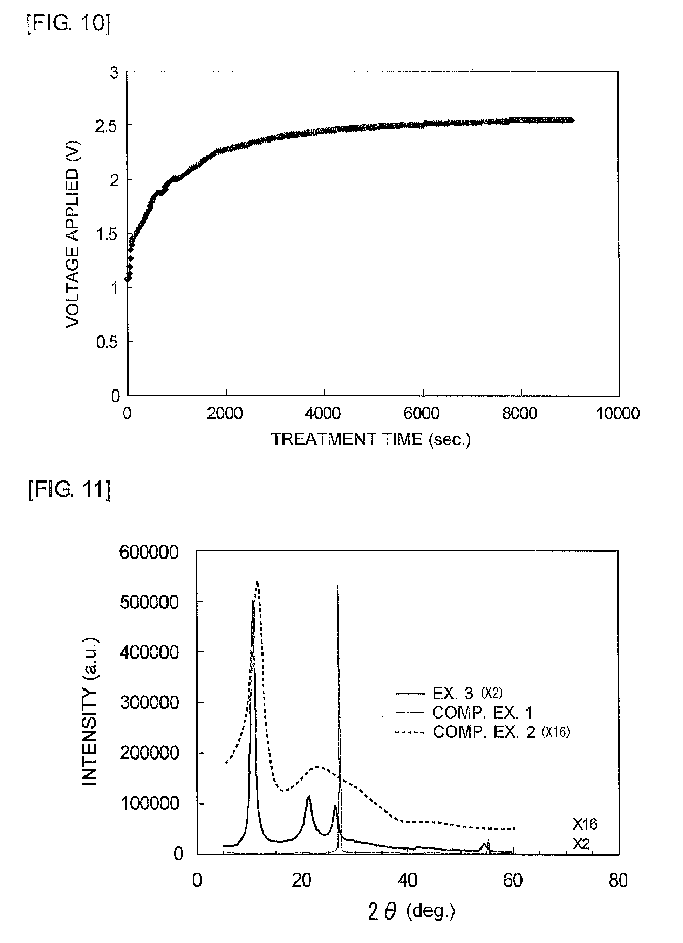

Expanded graphite was obtained in the same manner as in Example 1 except that in the electrochemical treatment, a voltage shown in Fig. 10 was applied for 1.5 hours.
The expanded graphite thus obtained was dried and the multilayer structure of the resultant expanded graphite was evaluated by XRD measurement. An XRD pattern of the expanded graphite of Example 3 is shown by the solid line in Fig. 11.

### (Example 4)

The expanded graphite obtained in Example 1 was cut into 1-cm pieces and one of the pieces was put into a carbon crucible and subjected to an electromagnetic induction heating treatment. An induction heating apparatus used was MU-1700D manufactured by SK Medical Electronics Co., Ltd. and the treatment was conducted at a current of 10 A in an atmosphere of argon gas so that the highest achieving temperature was 550°C. When during the treatment the temperature at the surface of the expanded graphite was measured with a radiation thermometer, it took 12 seconds for the surface temperature of the expanded graphite to rise from room temperature to 550°C. By the above treatment, the expanded graphite was exfoliated.

When powder of the resultant exfoliated graphite was measured using nitrogen gas with a specific surface area measurement system ASAP-2000 manufactured by Shimadzu Corporation, it exhibited a specific surface area of 687 m²/g in a single measurement.

### (Example 5)

As shown in Fig. 7, pre-expanded graphite was fed between a pair of rolls and sheet-formed to prepare a low-density graphite sheet with a density of 0.7 and a thickness of 1 mm.

The graphite sheet with a density of 0.7 obtained in the above manner was cut into a size of 5 cm by 5 cm to obtain a graphite sheet serving as an electrode material. Two slits were cut and formed in this graphite sheet, as shown in Fig. 4, with a cutter knife to have a slit length of 1 cm.

Next, a Pt-made electrode 2 shown in Fig. 2 was inserted into the graphite sheet with the two slits formed therein. The graphite sheet thus prepared was used as a working electrode (anode) and a portion of the graphite sheet was immersed into an aqueous nitric acid solution having a concentration of 60% by weight, together with a counter electrode (cathode) made of Pt and a reference electrode made of Ag/AgCl. In the immersion, a portion of the 5 cm by 5 cm graphite sheet from the lower end to 4 cm above the lower end was immersed into the aqueous nitric acid solution, while the upper portion of the graphite sheet was not immersed into the aqueous nitric acid solution.

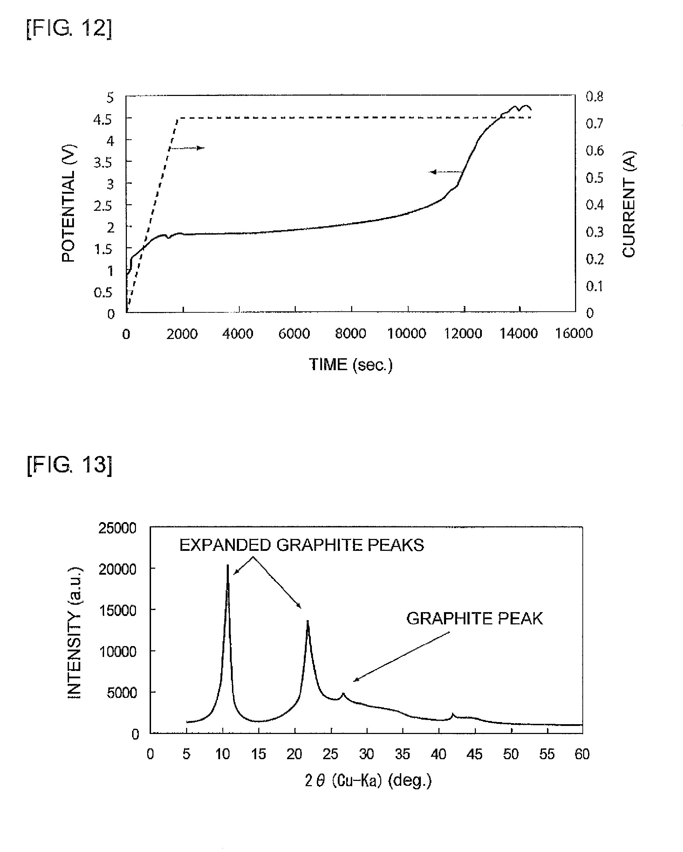

Subsequently, the graphite sheet was subjected to an electrochemical treatment by applying direct voltage thereto. In the electrochemical treatment, a voltage was applied for four hours in the manner shown as the voltage application profile in Fig. 12. Thus, the portion of the original graphite sheet having been immersed in the aqueous nitric acid solution was made into expanded graphite and the portion of the graphite sheet having not been immersed therein was maintained in the original state of the graphite sheet, resulting in a carbonaceous material of Example 1.

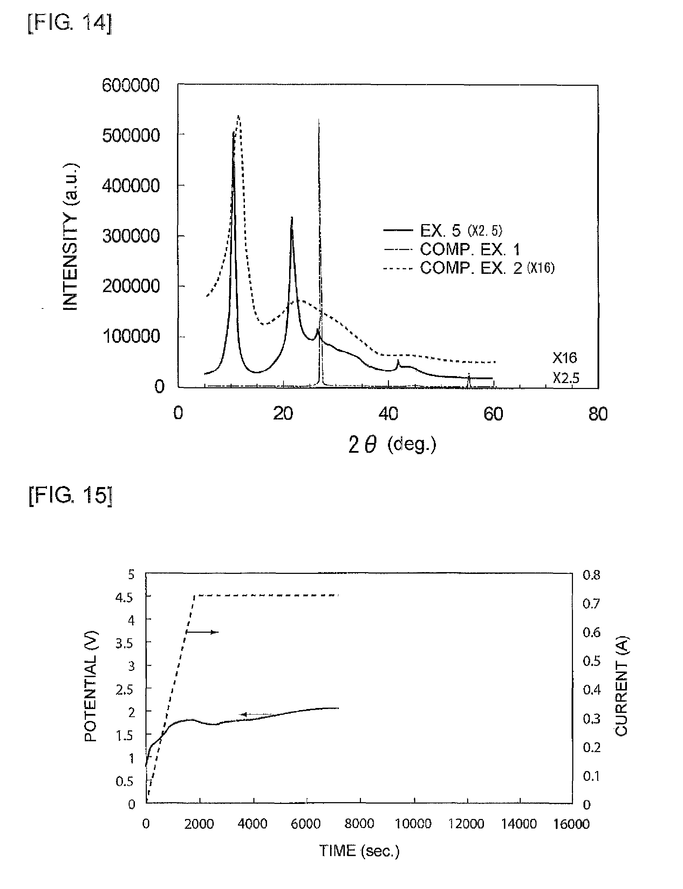

The carbonaceous material thus obtained was dried. The portion of the resultant carbonaceous material made into expanded graphite was cut out for evaluation and the multilayer structure of the expanded graphite portion was evaluated by XRD measurement. An XRD pattern of the expanded graphite portion of Example 1 is shown in Figs. 13 and 14. Note that in Fig. 14, the peak intensities of the XRD pattern are expressed at a magnification of 2.5 times.

### (Example 6)

In the carbonaceous material obtained in Example 5, the portion made into expanded graphite was cut into 1-cm pieces. One of the pieces of expanded graphite thus cut was put into a carbon crucible and subjected to an electromagnetic induction heating treatment. An induction heating apparatus used was MU-1700D manufactured by SK Medical Electronics Co., Ltd. and the treatment was conducted at a current of 14 A in an atmosphere of argon gas so that the highest achieving temperature was 550°C. When during the treatment the temperature at the surface of the expanded graphite was measured with a radiation thermometer, it took eight seconds for the surface temperature of the expanded graphite to rise from room temperature to 550°C. By the above treatment, the expanded graphite was exfoliated.
When powder of the resultant exfoliated graphite was measured using nitrogen gas with a specific surface area measurement system ASAP-2000 manufactured by Shimadzu Corporation, it exhibited a specific surface area of 1296 m²/g in a single measurement.

### (Example 7)

A carbonaceous material was obtained in the same manner as in Example 1 except that in the electrochemical treatment, a voltage was applied for two hours in the manner shown as the voltage application profile in Fig. 15.

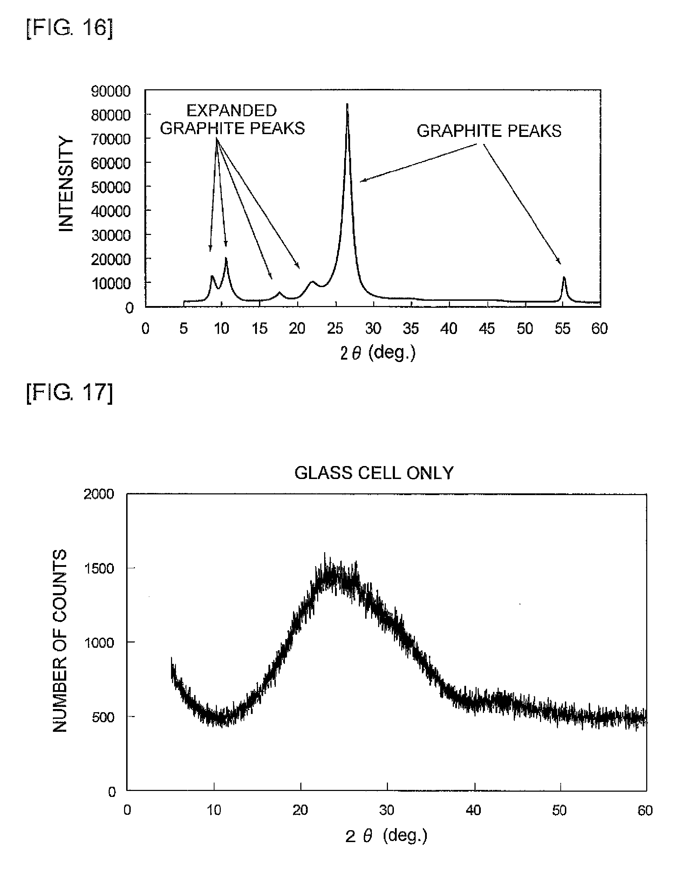

The carbonaceous material thus obtained was dried and the multilayer structure of a portion thereof made into expanded graphite was evaluated by XRD measurement in the same manner as in Example 1. An XRD pattern of the expanded graphite of Example 7 is shown by the solid line in Fig. 16.

### (Example 8)

The expanded graphite portion of the carbonaceous material obtained in Example 7 was cut into 1-cm pieces. One of the pieces of expanded graphite thus cut was put into a carbon crucible and subjected to an electromagnetic induction heating treatment. An induction heating apparatus used was MU-1700D manufactured by SK Medical Electronics Co., Ltd. and the treatment was conducted at a current of 14 A in an atmosphere of argon gas so that the highest achieving temperature was 550°C. When during the treatment the temperature at the surface of the expanded graphite was measured with a radiation thermometer, it took eight seconds for the surface temperature of the expanded graphite to rise from room temperature to 550°C. By the above treatment, the expanded graphite was exfoliated.

When powder of the resultant exfoliated graphite was measured using nitrogen gas with a specific surface area measurement system ASAP-2000 manufactured by Shimadzu Corporation, it exhibited a specific surface area of 887 m²/g in a single measurement.

### (Comparative Example 1)

An original, untreated, low-density graphite sheet prepared in Examples 1 and 3 was used as Comparative Example 1. An XRD pattern of the graphite prepared as Comparative Example 1 is shown by the dash-single-dot line in each of Figs. 9, 11, and 14.

### (Comparative Example 2)

An aqueous dispersion of exfoliated graphite was prepared in the following manner in accordance with an improved Hummers' method which is an existing method.

An amount of 0.25 g of natural graphite powder was fed into 11.5 ml of 65% by weight concentrated sulfuric acid and the resultant mixture was stirred with cooling in a 10°C water bath. Next, the mixture obtained by the stirring of the graphite single crystal powder and the concentrated sulfuric acid was stirred with gradual addition of 1.5 g of potassium permanganate to cause the mixture to react at 35°C for 30 minutes.

Next, 23 mL of pure water was gradually added to the reaction mixture to cause the mixture to react at 98°C for 15 minutes. Thereafter, 70 mL of pure water and 4.5 mL of 30% by weight hydrogen peroxide water were added to the reaction mixture to stop the reaction. Subsequently, the mixture was centrifuged at a rotational speed of 14000 rpm for 30 minutes. Thereafter, the resultant precipitate was well washed in 5% by weight dilute hydrochloric acid and water, resulting in an aqueous dispersion of exfoliated graphite in which exfoliated graphite is dispersed in water.

The aqueous dispersion of exfoliated graphite thus obtained was applied on a glass slide, dried, and then subjected to XRD measurement as it was on the glass slide. An XRD pattern of the exfoliated graphite obtained in this manner is shown by the broken line in each of Figs. 9, 11, and 14.

The peak near 23 degrees identified in this case is a broad peak derived from the glass cell, as shown in Fig. 17, and is not a peak due to the (004) plane of the expanded graphite.

As is obvious from Figs. 9, 11, and 14, Comparative Example 1, i.e., the original graphite, exhibits a large peak near 26 degrees in 2θ (CuKα), which is the peak of the (002) plane of the graphite. Furthermore, aside from this, a small peak can be identified near 50 degrees in 2θ (CuKα), which is the peak of the (004) plane of the graphite.

In contrast, in Example 1, the graphite-derived diffraction peaks near 26 degrees and near 50 degrees almost disappear as shown in Fig. 9 but a large diffraction peak appears near 10.6 degrees. This diffraction peak near 10.5 degrees is the peak of the (002) plane of the expanded graphite. This diffraction peak appearing near 10.6 degrees has a half width of 1.1 and is therefore a very sharp peak. Furthermore, another diffraction peak appears near 21 degrees and is the peak due to the (004) plane of the above expanded graphite. Therefore, as is obvious from Fig. 9, it can be seen that in Example 1, the evenness among the amounts of intercalation substance intercalated into their respective spaces between the graphene layers of the expanded graphite can be much improved as compared with Comparative Example 2.

Also in Examples 3 and 5, as shown in Figs. 11, 13, and 14, a sharp diffraction peak near 10. 6 degrees and a diffraction peak near 21 degrees appear. Therefore, it can be seen that also in Example 3, the evenness among the amounts of intercalation substance intercalated into their respective spaces between the graphene layers of the expanded graphite can be much improved as compared with Comparative Example 2.

In Example 7, as shown in Fig. 15, peaks for expanded graphite are divided into two types of peaks. A peak of one type is a peak of expanded graphite derived from graphite containing nitric acid intercalated between the layers, which appears near nine degrees, and a peak of the other type is a peak of expanded graphite derived from graphite oxidation, which appears near 10.7 degrees. The diffraction peaks due to the (004) plane of both types appear near 18 degrees and near 21 degrees, respectively. Therefore, it can be seen that also in Example 7, the evenness among the amounts of intercalation substance intercalated into their respective spaces between the graphene layers of the expanded graphite can be improved as compared with Comparative Example 2.

### Reference Signs List

- 1: sheet
- 1a, 1b: slit
- 2: electrode
- 2a, 2b: insertion portion
- 2c: connecting portion
- 6: electrolyte solution
- 7: counter electrode
- 8: reference electrode
- 11: carbonaceous material
- 12: graphite portion
- 13: expanded graphite
- 21: preformed sheet
- 22, 23: roll

## Claims

1. A carbonaceous material wherein an intercalation substance is intercalated between graphenes of a graphene stack,
the carbonaceous material being expanded graphite an XRD pattern of which shows respective diffraction peaks within a range of 7 to 12 degrees of 2θ and within a range of 18 to 24 degrees of 2θ and in which a diffraction peak within a range of 25 to 27 degrees of 2θ has a smaller height than the diffraction peak within the range of 18 to 24 degrees of 2θ and a half width of the peak appearing within the range of 7 to 12 degrees of 2θ is 4 degrees or less.

2. The carbonaceous material according to claim 1, wherein the graphene includes graphene oxide.

3. A carbonaceous material including the carbonaceous material according to claim 1 or 2 and a graphite portion continuous with the carbonaceous material according to claim 1 or 2.

4. A process for producing a carbonaceous material, the process comprising the steps of:
preparing sheet-like graphite or sheet-like pre-expanded graphite;
inserting a portion of an electrode made of metal into the graphite or the pre-expanded graphite to pass the portion of the electrode through each of graphene surfaces of the graphite or the pre-expanded graphite, thereby bringing the electrode into contact with a plurality of graphene layers forming the graphite; and
immersing at least a portion of the graphite or the pre-expanded graphite with the portion of the electrode inserted therein into an aqueous electrolyte solution and subjecting at least the portion of the graphite or the pre-expanded graphite to an electrochemical treatment using the graphite as a working electrode to apply direct voltage between the working electrode and a counter electrode, thereby obtaining a carbonaceous material at least of which is expanded graphite.

5. The process for producing a carbonaceous material according to claim 4, wherein in the step of obtaining the carbonaceous material, the whole of the graphite or the pre-expanded graphite with the portion of the electrode inserted therein is immersed into the aqueous electrolyte solution and subjected to the electrochemical treatment using the graphite as the working electrode to apply direct voltage between the working electrode and the counter electrode to obtain a carbonaceous material the whole of which is expanded graphite.

6. The process for producing a carbonaceous material according to claim 4, wherein in the step of obtaining the carbonaceous material, a portion of the graphite or the pre-expanded graphite with the portion of the electrode inserted therein is immersed into the aqueous electrolyte solution and subjected to the electrochemical treatment using the graphite as the working electrode to apply direct voltage between the working electrode and the counter electrode to obtain a carbonaceous material including the expanded graphite and graphite continuous with the expanded graphite.

7. The process for producing a carbonaceous material according to any one of claims 4 to 6, wherein the sheet-like pre-expanded graphite is a sheet formed by pressing pre-expanded graphite.

8. The process for producing a carbonaceous material according to any one of claims 4 to 7, wherein in a method of inserting the electrode, a plurality of slits are formed in the graphite or the pre-expanded graphite and
the electrode used is an electrode including: a plurality of insertion portions to be inserted into the plurality of slits; and a connecting portion connecting the plurality of insertion portions.

9. The process for producing a carbonaceous material according to any one of claims 4 to 8, wherein in the electrochemical treatment, a direct current voltage within a range of 0.3 V to 10 V is applied over an hour but less than 500 hours.

10. The process for producing a carbonaceous material according to any one of claims 4 to 9, wherein the graphite or the pre-expanded graphite has a density within a range of 0.5 to 0.9.

11. The process for producing a carbonaceous material according to any one of claims 4 to 10, wherein
the step of preparing the sheet-like graphite or the sheet-like pre-expanded graphite comprises the steps of:
preparing a preformed sheet made of graphite powder or pre-expanded graphite powder; and
rolling the preformed sheet to obtain the sheet-like graphite or the sheet-like pre-expanded graphite.

12. A process for producing exfoliated graphite further comprising, in the process for producing a carbonaceous material according to any one of claims 4 to 11, the step of applying an exfoliation force to the carbonaceous material to obtain exfoliated graphite after the step of obtaining the carbonaceous material in the process for producing a carbonaceous material.

13. A process for producing exfoliated graphite further comprising, in the process for producing a carbonaceous material according to claim 6, the steps of:
cutting the expanded graphite out of the carbonaceous material after the step of obtaining the carbonaceous material in the process for producing a carbonaceous material; and
applying an exfoliation force to the expanded graphite to obtain exfoliated graphite.

14. The process for producing exfoliated graphite according to claim 12 or 13, wherein the step of applying the exfoliation force is performed by the step of applying one type of energy selected from the group consisting of heat, mechanical exfoliation force, and ultrasonic wave.

15. The process for producing exfoliated graphite according to claim 14, wherein the step of applying the exfoliation force is performed by heating the expanded graphite at a temperature of 300°C to 1200°C.

16. The process for producing exfoliated graphite according to claim 14, wherein the step of applying the exfoliation force is performed by heating the expanded graphite at a temperature of 300°C to 600°C.

17. The process for producing exfoliated graphite according to claim 14, wherein the step of applying the exfoliation force is performed by heating the expanded graphite from room temperature to 550°C within 10 seconds.

18. Exfoliated graphite obtained by the process for producing exfoliated graphite according to any one of claims 12 to 17.
